Europäisches Patentamt

European Patent Office

Office européen des brevets

(11) Veröffentlichungsnummer: **0 381 840**
**A2**

## (12) EUROPÄISCHE PATENTANMELDUNG

(21) Anmeldenummer: **89123005.4**

(22) Anmeldetag: **13.12.89**

(51) Int. Cl.⁵: **C07F 7/08**

(30) Priorität: **10.02.89 DE 3903985**

(43) Veröffentlichungstag der Anmeldung:
**16.08.90 Patentblatt 90/33**

(84) Benannte Vertragsstaaten:
**AT BE CH DE FR GB IT LI NL**

(71) Anmelder: **HÜLS AKTIENGESELLSCHAFT**
**Patentabteilung / PB 15 - Postfach 13 20**
**D-4370 Marl 1(DE)**

(72) Erfinder: **Zoche, Günter, Dr.**
**Königsheimstrasse 13**
**D-5300 Bonn 3(DE)**

(54) **Verfahren zur Herstellung von Ketoximosilanen.**

(57) Vorliegende Erfindung beschreibt ein Verfahren zur Herstellung von Ketoximosilanen. Als Ausgangsverbindungen werden Alkyl- bzw. Alkenylacetoxysilane eingesetzt, die mit Ketoximen in Gegenwart von Ammoniak umgesetzt werden. Es wird eine einfache Apparatur beschrieben, in welcher diese Umsetzung kontinuierlich durchführbar ist. Die erfindungsgemäß hergestellten Ketoximosilane sind z. B. wertvolle Vernetzer für Organopolysiloxanmassen.

EP 0 381 840 A2

## Verfahren zur Herstellung von Ketoximosilanen

Gegenstand der vorliegenden Erfindung ist ein Verfahren zur Herstellung von Ketoximosilanen. Diese Siliciumverbindungen eignen sich insbesondere als vernetzende Siliciumverbindungen bei der Herstellung von unter Ausschluß von Wasser lagerfähigen und bei Zutritt von Feuchtigkeit bei Raumtemperatur zu Elastomeren härtbaren Massen. Solche Massen werden durch Vermischen von kondensationsfähige Endgruppen aufweisenden Diorganopolysiloxanen und vernetzenden Siliciumverbindungen erhalten.

Es ist bekannt, Ketoximosilane durch Umsetzung von Alkyltrichlorsilanen mit Ketoximen herzustellen (vgl. DE-AS 13 01 140; EP-PS 0 082 324; SU-PS 435 243 und 724 514). Bei der Durchführung dieser Verfahren besteht stets die Gefahr, daß Ketoxim bzw. Ketoximosilan mit anorganischen Substanzen stark saurer Natur in Kontakt kommen. Intermediär entstehendes HCl bildet dann das Hydrochlorid des Ketoxims. Beispielsweise siedet Methylethylketoxim unter Normaldruck bei 152 °C ohne Zersetzung, während sich dessen Hydrochlorid bereits bei 50 bis 70 °C sehr heftig zersetzt. Solche Zersetzungen können außerdem schon durch katalytische Mengen von z. B. FeCl$_3$ ausgelöst werden. Auch Ketoximosilane neigen unter solchen Bedingungen zu explosionsartigen Zersetzungen. L. J. Tyler (Chem. Eng. News 52 (1974) 35, 3) berichtet von zwei heftigen Explosionen dieser Art.

Es ist bekannt, Ketoximosilane durch Umsetzung von Organochlorsilanen mit Ketoximen in Gegenwart von geeigneten Säureakzeptoren und Lösungsmitteln herzustellen (US-PS 3 962 160; US-PS 3 441 583; US-PS 3 341 486; US-PS 3 817 909; DE-AS 13 01 140; DE-AS 11 20 690; DE-AS 12 55 924; FR-PS 11 18 495; EP-PS 0 036 262; W. Noll, Chemie und Technologie der Silikone, Seite 342, Verlag Chemie, Weinheim 1968; EP-OS 0 293 306).

Bei diesen bekannten Verfahren fallen als Nebenprodukte in Abhängigkeit von dem eingesetzten Säureakzeptor feste Ammoniumsalze, wie beispielsweise Ammoniumchlorid, oder Amin-Hydrochloride in sehr feinteiliger, damit relativ schwer filtrierbarer und schwer auswaschbarer Form an. Auch bei diesen Verfahren ist die Gefahr der oben beschriebenen explosionsartigen Zersetzungen gegeben, z.B. durch Bildung sogenannter "saurer Nester" oder schon durch an sich geringfügige Dosierfehler.

Das Filtrat einer Filtration der bei den obengenannten Verfahren entstehenden Produkte enthält das gewünschte Oximosilan, das nach dem Abdestillieren des Lösungsmittels im Sumpf häufig gefärbt und ammoniumchloridhaltig zurückbleibt. Eine anschließende Destillation des jeweiligen Ketoximosilans muß in Vakuum erfolgen, ist dann aufwendig und nicht ungefährlich, da man sich bei diesem Verfahrensschritt bereits an der Grenze der thermischen Beständigkeit der Ketoximosilane befindet.

Es bestand deshalb die Aufgabe, ein Herstellungsverfahren für Ketoximosilane zu finden, bei dem

a) die Gefahr von Zersetzungen oder Explosionen nicht besteht,

b) eine problemlose kontinuierliche Umsetzung möglich ist,

c) ein leicht abzutrennender Feststoff entsteht und

d) keine Destillation des Ketoximosilans erforderlich ist.

In Erfüllung dieser Aufgabe wurde nun ein Verfahren zur Herstellung von Ketoximosilanen der allgemeinen Formel I

$$R_n^1 Si(O-N=CR_2^2)_{(4-n)} \qquad (I),$$

in der R$^1$ einen Alkylrest mit 1 bis 18 Kohlenstoffatomen und/oder einen Alkenylrest mit 2 bis 18 Kohlenstoffatomen, n eine ganze Zahl von 0 bis 3 und R$^2$ gleiche oder ungleiche Alkylreste mit jeweils 1 bis 6 Kohlenstoffatomen bedeuten, durch Umsetzen eines Acetoxysilans der allgemeinen Formel II

$$R_n^1 Si(OCOCH_3)_{(4-n)} \qquad (II),$$

worin R$^1$ und n dieselbe Bedeutung wie in der allgemeinen Formel I haben, mit einem Ketoxim der allgemeinen Formel III

$$HO-N=CR_2^2 \qquad (III),$$

wobei R$^2$ dieselbe Bedeutung wie in der allgemeinen Formel I hat, gefunden, das dadurch gekennzeichnet ist, daß man das Gemisch aus Acetoxysilan und Ketoxim in Gegenwart eines Lösungsmittels durch Reaktion mit Ammoniak vollständig zu den Ketoximosilanen umsetzt, das gebildete Ammoniumacetat abfiltriert und die Ketoximosilane durch Abdestillieren des Lösungsmittels isoliert.

Im Gegensatz zu anderen,bekannten Verfahren (EP-OS 0 273 189; DE-PS 37 03 484) werden Ketoximosilane nach diesem Verfahren undestilliert in farbloser Form erhalten.

Die bei der Umsetzung auftretenden Wärmemengen sind leicht beherrschbar. Werden z. B. Methyl-triacetoxysilan und Ethyl-methylketoxim von 20 °C im Molverhältnis 1 : 3 ohne äußere Kühlung zusammengegeben, so wird nur eine Erwärmung auf 38 °C beobachtet. Bei erfindungsgemäßer Verwendung eines Lösungsmittels als Reaktionsmedium ist die Erwärmung entsprechend kleiner. Solche Lösungen einer Temperatur von 20 °C erwärmen sich in Abhängigkeit von der Geschwindigkeit der NH$_3$-Zugabe ohne äußere Kühlung nur auf 35

bis 45 °C.

Für die diskontinuierliche Umsetzung kann die stöchiometrische Ammoniakmenge gasförmig in die Lösung eingeleitet werden.

Für eine kontinuierliche Arbeitsweise empfiehlt sich folgende sehr einfache Methode:
In einen mit $NH_3$-Gas gefüllten Reaktor wird die flüssige Lösung aus Acetoxysilan, Ketoxim und Lösungsmittel im oberen Teil feinverteilt eingebracht. Dies kann z. B. mit Hilfe von Düsen geschehen. Durch Vorkühlung der einzuspritzenden Lösung und durch Änderung des Lösungsmittelanteils ist die Temperatur im Reaktor leicht zu steuern. Der $NH_3$-Verbrauch im Reaktor ist durch Messung des Druckes im Reaktor einfach bestimmbar. Diese Druckmessung ist maßgebend für die laufende $NH_3$-Dosierung und kann mit dieser gekoppelt werden. Das sich am Boden des Reaktors sammelnde Reaktionsprodukt wird als Suspension kontinuierlich ausgeschleust.

Das als Feststoff anfallende Ammoniumacetat ist in allen Fällen sehr leicht abfiltrierbar. Das Filtrat wird möglichst schonend (Vakuum) vom Lösungsmittel und anderen leichtflüchtigen Bestandteilen destillativ befreit. Während das fertige Ketoximosilan zurückbleibt, kann das Destillat ohne weitere Behandlung wieder eingesetzt werden.

Geeignete Lösungsmittel sind z. B.:
Pentan, Hexan, Heptan, Cyclohexan, 1,1,2-Trichlor-1,2,2-trifluor-ethan.

Beispiel 1

Methyl-tris-(ethyl-methyl-ketoximo)-silan

In einem 2-Liter-Kolben werden unter Rühren 840 ml n-Heptan, 132 g (0.6 Mol) Methyl-triacetoxy-silan und 165 g (1,9 Mole) Ethyl-methyl-ketoxim zusammengegeben. Nach Abkühlung auf ca. 20 °C werden 2 Mole $NH_3$-Gas innerhalb von 1 Stunde eingeleitet. Das ausgefallene Ammoniumacetat wird auf einer Glasfritte (G2) abgesaugt und zweimal mit je 240 ml n-Heptan gewaschen. Bei ca. 130 mbar wird aus dem Filtrat das n-Heptan abdestilliert. Die letzten leichtflüchtigen Anteile werden durch schnelles und kurzes Aufheizen auf 90 °C bei 0,5 mbar entfernt.

Es werden 172 g Methyl-tris-(ethyl-methyl-ketoximo)-silan als farblose Flüssigkeit erhalten.

Beispiel 2

Vinyl-tris-(ethyl-methyl-ketoximo)-silan

In einem 2-Liter-Kolben werden unter Rühren 950 ml n-Pentan, 139 g (0,6 Mol) Vinyl-triacetoxy-silan und 165 g (1,9 Mole) Ethyl-methyl-ketoxim zusammengegeben. Nach Abkühlung auf ca. 20 °C werden 2 Mole $NH_3$-Gas innerhalb von 1 Stunde eingeleitet.

Nach Aufarbeitung analog Beispiel 1 werden 169 g Vinyl-tris-(ethyl-methyl-ketoximo)-silan als farblose Flüssigkeit erhalten.

**Ansprüche**

1. Verfahren zur Herstellung von Ketoximosilanen der allgemeinen Formel I
$$R_n^1 Si(O-N=CR_2^2)_{(4-n)} \qquad (I),$$
in der $R^1$ einen Alkylrest mit 1 bis 18 Kohlenstoffatomen und/oder einen Alkenylrest mit 2 bis 18 Kohlenstoffatomen, n eine ganze Zahl von 0 bis 3 und $R^2$ gleiche oder ungleiche Alkylreste mit jeweils 1 bis 6 Kohlenstoffatomen bedeuten, durch Umsetzen eines Acetoxysilans der allgemeinen Formel II
$$R_n^1 Si(OCOCH_3)_{(4-n)} \qquad (II)$$
mit einem Ketoxim der allgemeinen Formel III
$$HO-N=CR_2^2 \qquad (III),$$
**dadurch gekennzeichnet,** daß man das Gemisch aus Acetoxysilan und Ketoxim in Gegenwart eines Lösungsmittels durch Reaktion mit Ammoniak vollständig zu den Ketoximosilanen umsetzt, das gebildete Ammoniumacetat abfiltriert und die Ketoximosilane durch Abdestillieren des Lösungsmittels isoliert.

2. Verfahren nach Anspruch 1, dadurch gekennzeichnet, daß man die Lösung aus Acetoxysilan, Ketoxim und Lösungsmittel feinverteilt in eine Ammoniakatmosphäre einbringt.

3. Verfahren nach Anspruch 1 oder 2, dadurch gekennzeichnet, daß als Reaktionsmedium ein flüchtiges, inertes, organisches Lösungsmittel verwendet wird.